# EUROPEAN PATENT APPLICATION

(11) **EP 1 672 371 A1**
(43) Date of publication of application: **21.06.2006**
(21) Application number: 05102503.9
(22) Date of filing: 30.03.2005
(51) Int. Cl.: G01P 3/44, G01P 3/487, F16J 15/32, B60B 27/00, F16C 19/18

(54) **A bearing assembly for the hub of a motor vehicle wheel with a sealing device and a device for detecting rotation**

(30) Priority: 20.12.2004 IT TO20040889
(71) Applicant: Aktiebolaget SKF, 415 50 Göteborg (SE)
(72) Inventor: Vignotto, Angelo, I-10134 Torino (IT); Savarese, Claudio, I-10060 Airasca (Torino) (IT)
(74) Representative: Fioravanti, Corrado

(57) **Abstract**

The bearing assembly includes an outer rotatable race (10), one or two inner stationary races (11), an annular sealing gasket (15a) mounted laterally between the outer and inner races, and a phonic wheel (13) of magnetized plastic or rubber having an annular cylindrical shape mounted co-axially around an outer cylindrical surface (10a) of the outer race (10). The sealing gasket (15a) and the phonic wheel are both supported by a single metallic annular insert (14). The insert (14) forms a first cylindrical portion (14a) on which the phonic wheel (13) is co-moulded or vulcanized, a second cylindrical portion (14b) forcedly mounted against a second cylindrical surface (10b) of the outer race (10), and a flange (14e) on which the sealing gasket (15a) is vulcanized.

## Description

The present invention refers to a bearing assembly for the hub of a motor vehicle wheel with a sealing device and a device for detecting rotational speed.

There are known bearing assemblies which comprise a bearing unit with a rotatable outer race, a stationary inner race, sealing devices mounted at the sides of the bearing for sealing the gap between the races, and a phonic wheel or encoder being part of a device for sensing relative rotation between the races of the bearing unit. The phonic wheel is a cylindrical annular element of magnetised plastic or rubber which is fixed co-axially to the outside of a metallic insert of substantially cylindrical shape forcedly fitted around the outer rotating race of the bearing. The lateral sealing devices each comprise a flexible annular gasket vulcanized onto a respective metallic annular insert fixed to the rotating race or the stationary race. The gasket forms one or more sealing lips adapted to slide against an opposite surface secured to the other race (stationary or rotating).

The force fit of the shield supporting the phonic wheel inevitably deforms and sometimes breaks the phonic wheel, thereby impairing operation of the rotation detecting device.

An object of the present invention is to provide a bearing assembly in which the above-mentioned drawback is eliminated. Another object of the invention is to simplify mounting the phonic wheel and the sealing devices onto the bearing unit.

These and other objects and advantages, which will be more clearly understood herein after, are fulfilled according to the invention by a bearing assembly as defined in the appended claims.

A description will now be given of the constructional and functional features of a few preferred but not-limiting embodiments of the invention; reference is made to the accompanying drawings, in which:
figure 1 is axial cross-sectional view of a first embodiment of a bearing assembly according to the invention;
figure 2 is an enlarged view of a detail indicated II in figure 1 and;
figure 3 is a view similar to that of figure 2, showing a second embodiment of the invention.

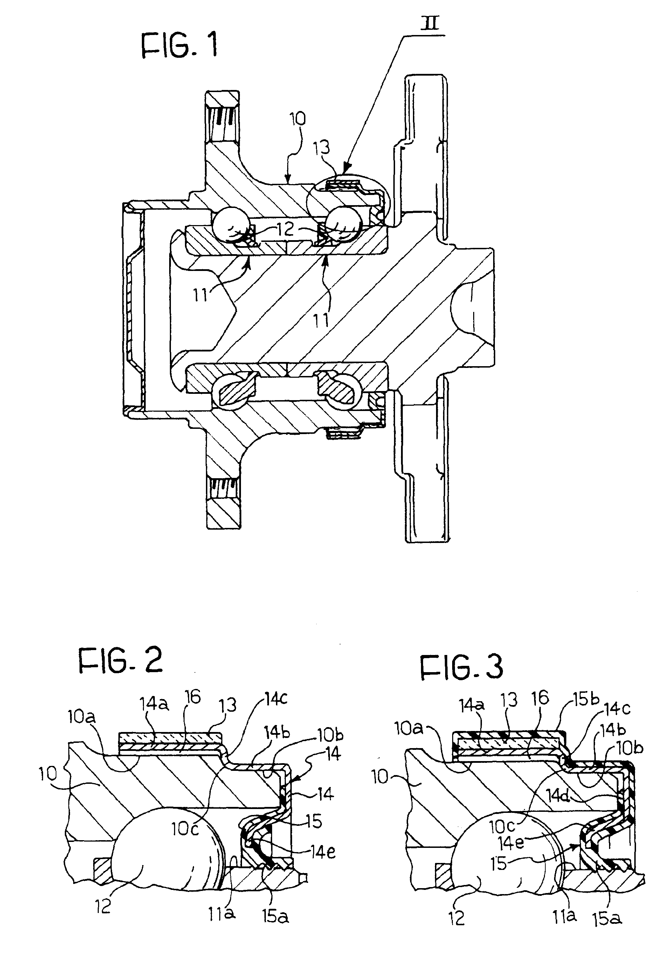

Referring initially to figures 1 and 2, a bearing unit for the hub of a motor vehicle wheel comprises a radially outer rotatable race 10, radially inner stationary races 11, and rolling bodies 12, in this example balls, interposed between the races 10 and 11.

The bearing unit is equipped with a device for sensing the rotational speed of the outer race 10 relatively to the inner race 11. This device includes a phonic wheel or encoder 13, mounted onto the rotating race 10, and a sensor (not shown) facing the phonic wheel 13 and mounted onto a fixed part of the vehicle.

The phonic wheel 13 is an annular cylindrical element of plastic or rubber magnetized with polarities alternating in a circumferential direction, co-moulded or vulcanized onto a metallic insert 14 of generally annular shape, forcedly fitted onto the outer race 10. The insert 14 is suitably shaped so as to also form an extension acting as a support for a gasket of a sealing device of the bearing, as described in the following.

The insert 14 forms a first, radially outer, cylindrical axial portion 14a around which the phonic wheel 13 is co-moulded or vulcanized. Adjacent to the portion 14a supporting the phonic wheel 13, the insert 14 forms a second axial cylindrical portion 14b having a smaller diameter than that of the first cylindrical portion 14a. This second cylindrical portion 14b is forcedly fitted with radial interference onto a cylindrical outer surface 10b of the race 10. The first cylindrical portion 14a has an inner diameter slightly greater than the outer diameter of the race 10 at a zone 10a of the latter surrounded by the phonic wheel 13, so as to define a narrow cylindrical gap 16 or at least some radial play between the outer race 10 and the cylindrical portion 14a supporting the phonic wheel 13. As shown in figure 2, the first cylindrical portion 14a of the insert 14 is supported projecting around the portion 10a of the race 10 by means of a radial portion 14c, connecting the cylindrical portions 14a and 14b, and abutting axially against a step or radial shoulder 10c which joins the cylindrical surfaces 10a and 10b.

The second cylindrical portion 14b is joined to a radial wall 14d adapted for abutting against a side surface 10d of the outer race 10. The radial wall 14d is prolonged forming a radial flange 14e which extends in a radially inner direction towards the inner stationary race 11. A body 15 of rubber or elastomeric material is co-moulded or vulcanized on the radial flange 14e.

The body 15 forms a radially inner portion 15a performing essentially sealing action by sliding against a stationary surface 11a secured to or integral with the inner race 11.

In accordance with the alternative embodiment shown in figure 3, the rubber body 15 forms integrally also a coating layer 15b that extends to cover the phonic wheel 13 on the outside in order to protect it from mud and crashes of stones and other objects coming from the near wheel. The coating layer 15b further cooperates to lock the phonic wheel 13 steadily on the supporting insert 14, and dispenses from applying a layer of adhesive between the insert 14 and the phonic wheel 13 in case the latter is made of plastoferrite. The coating layer 15b implies a further advantage during the magnetizing step of the phonic wheel, after this has been coupled to the insert 14: owing to its elasticity, the layer 15b adapts itself to the shape of the seat of the tool in which the phonic wheel to be magnetized is inserted, and therefore guarantees a correct positioning of the phonic wheel in the magnetizing apparatus also in those cases where the phonic wheel is not perfectly circular.

As will be appreciated, a single metallic insert 14 supports both the phonic wheel 13 and the rubber body 15 that forms the sealing gasket. Having to handle and mount a single metallic insert instead of two, assembling operations are simplified as compared to prior art, since one supporting insert is eliminated, and, furthermore, only one special apparatus is required for mounting the single insert 14. Due to the particular shape of the insert 14, its force fitting onto the outer race 10 does not affect the coupling between the insert 14 and the phonic wheel 13, since neither cracks nor appreciable deformation are caused in the phonic wheel. Strain deriving from the force fitting is entirely absorbed by the portion 14b of the insert 14.

It is to be understood that the invention is not limited to the embodiments described and illustrated here, which are to be regarded as exemplary embodiments of the invention. The invention is instead capable of modification with respect to shape, arrangement of parts, constructional and functional details. For example, those skilled in the art will recognize that the counterface surface 11a against which the lips of the gasket 15a slide, could be replaced by a conventional annular metallic shield (known as "flinger") having a substantially L-shaped transversal cross-section.

## Claims

1. A bearing assembly for the hub of a motor vehicle wheel, including:
- a radially outer rotatable race (10);
- at least one radially inner stationary race (11);
- at least one annular sealing gasket (15a) of elastic material mounted laterally between the outer and inner races;
- first supporting means for fixing the gasket (15) to the rotatable outer race (10);
- a phonic wheel (13) of magnetized plastic or rubber having a substantially annular cylindrical shape mounted co-axially around a first cylindrical outer surface (10a) of the outer race (10);
- second supporting means for fixing the phonic wheel (13) to the outer race (10);
**characterized in that** said first and second supporting means are formed integrally by a single metallic annular insert (14) having
- a first, radially outer cylindrical portion (14a) on which the phonic wheel (13) is co-moulded or vulcanized;
- a second cylindrical portion (14b) forcedly mounted against a second cylindrical surface (10b) of the outer race (10) ;
- a further flange portion (14e) extending in a radially inner direction towards the inner stationary race (11), on which flange portion (14e) there is co-moulded or vulcanized a body of rubber or elastomeric material (15) forming said annular gasket (15a) adapted to slide on a surface (11a) fixed to or integral with the stationary race (11).

2. A bearing assembly according to claim 1, **characterized in that** the first cylindrical portion (14a) of the insert (14) is fitted around the first cylindrical surface (10a) of the outer race (10) in such manner as to form with this surface a cylindrical gap (16) or a predetermined radial play.

3. A bearing assembly according to claim 1, **characterized in that** the first (14a) and the second (14b) cylindrical portions of the insert (14) are axially adjacent.

4. A bearing assembly according to claim 3, **characterized in that** the first (14a) and the second (14b) cylindrical portions of the insert (14) are joined by a radial connecting portion (14c).

5. A bearing assembly according to claims 2 and 4, **characterized in that** the radial connecting portion (14c) supports the first (14a) cylindrical portion of the insert (14) projecting around the first cylindrical surface (10a) of the outer race (10).

6. A bearing assembly according to claim 3, **characterized in that** the radial connecting portion (14c) abuts axially against a shoulder (10c) formed by the outer race (10) between the first (10a) and the second (10b) cylindrical surfaces.

7. A bearing assembly according to claim 1, **characterized in that** the body (15) of a rubber or elastomeric material further forms a coating layer (15b) covering the phonic wheel (13) from the outside.
